# EUROPÄISCHE PATENTSCHRIFT

(11) **EP 2 464 536 B1**
(45) Veröffentlichungstag und Bekanntmachung des Hinweises auf die Patenterteilung: **12.09.2018**
(21) Anmeldenummer: 10743026.6
(22) Anmeldetag: 28.07.2010
(51) Int. Cl.: B62J 6/18, B62M 6/45, B62M 6/80, B60L 11/18, H01B 9/04

(54) **ANTRIEBSANORDNUNG, BEISPIELSWEISE FÜR EIN ELEKTROFAHRRAD**
DRIVE ARRANGEMENT, FOR EXAMPLE FOR AN ELECTRIC BICYCLE
DISPOSITIF MOTOPROPULSEUR PAR EXEMPLE DESTINÉ À UNE BICYCLETTE

(30) Priorität: 14.08.2009 DE 202009011111 U
(43) Veröffentlichungstag der Anmeldung: 20.06.2012
(73) Patentinhaber: Rosenberger Hochfrequenztechnik GmbH & Co. KG, 83413 Fridolfing (DE)
(72) Erfinder: ECKART, Christian, 83377 Vachendorf (DE); ARNOLD, Martin, 91166 Georgensmünd (DE); SINGHAMMER, Martin, 83413 Fridolfing (DE); BLAKBORN, Willem, 83334 Inzell (DE)
(74) Vertreter: Zeitler Volpert Kandlbinder Patent- und Rechtsanwälte Partnerschaft mbB
(86) Internationale Anmeldenummer: PCT/EP2010/004632
(87) Internationale Veröffentlichungsnummer: WO 2011/018164

(56) Entgegenhaltungen:
- EP-A1- 0 197 370
- DE-A1- 2 310 528
- DE-A1- 19 851 367
- DE-A1-102006 030 180
- FR-A1- 2 916 097
- "Installation Instructions 16"-20"", , 1 May 2007 (2007-05-01), XP055010225, Internet Retrieved from the Internet: URL:http://www.nabendynamo.de/produkte/pdf /english/Montage_SON_20_e.pdf [retrieved on 2011-10-21]

## Beschreibung

Die vorliegende Erfindung betrifft ein Elektrofahrrad, insbesondere Pedelec (Pedal Electric Cycle) oder E-Bike, mit einer Antriebsanordnung, wobei die Antriebsanordnung einen Elektromotor, eine Energiequelle für elektrische Energie und ein die Energiequelle mit dem Elektromotor elektrisch verbindendes Energieübertragungskabel.

Ein gattungsgemäßes Elektrofahrrad ist bereits aus der FR 582.287 aus dem Jahre 1924 bekannt. Elektrofahrräder und bei diesen insbesondere so genannte Pedelec's (pedal electric cycle; pedalunterstütztes Elektrorad) sind beispielsweise aus der Publikation "E-motion - Ein Spezial von Radfahren & ExtraEnergy.org", BVA Bielefelder Verlag, 2009 bekannt und erfreuen sich immer größerer Beliebtheit. Bei einem Pedelec, das im Wesentlichen wie ein herkömmliches Fahrrad mit manuellem Tretantrieb mit Pedalen aufgebaut ist, ist ein elektrischer Antriebsmotor vorgesehen, der von einer Energiequelle für elektrische Energie versorgt wird und in Abhängigkeit von einer Krafteinwirkung auf die Pedale des Pedelec's eine zur Muskelkraft zusätzliche Antriebsleistung zur Verfügung stellt. Der Elektromotor ist aktiv, wenn man in die Pedale tritt. Der Benutzer des Pedelec erfährt ein Fahren wie mit Rückenwind.

Eine andere Gruppe der Elektrofahrräder beinhaltet das so genannte "E-Bike". Hierbei ist der Motor aktiv, wenn man an einem Gasgriff dreht. Das Fahren mit dem Elektromotor als Antrieb ist hierbei auch ohne treten der Pedale möglich. Muskelkraft und Elektromotor sind unabhängig voneinander wirkende Systeme. E-Bikes können sowohl rein elektrisch wie auch im Mischbetrieb gefahren werden.

Unabhängig von der Art und Weise der Funktion und Arbeitweise des Elektromotors weisen alle derartigen Elektrofahrzeuge eine Antriebsanordnung mit dem Elektromotor und der elektrischen Energiequelle auf. Zur Übertragung von elektrischer Energie von der Energiequelle zum Elektromotor weist die Antriebsanordnung ein Energieübertragungskabel auf, welches elektrisch mit dem Elektromotor und der Energiequelle verbunden ist. Ggf. ist zusätzlich eine Elektronik vorgesehen, die die elektrische Spannung der Energiequelle auf eine Arbeitsspannung des Elektromotors umsetzt. Herkömmlicherweise sind diese Energieübertragungskabel als zweiadrige Kabel mit entsprechender roter und schwarzer Farbkennzeichnung für Plus und Minus der elektrischen Spannung ausgebildet.

Aus der DE 198 51 367 A1 ist ein Kraftfahrzeug mit einer Speiseleitung vorgesehen, die zwischen einem elektrischen Energiespeicher und einem Asynchronmotor vorgesehen ist. Die Speiseleitung weist einen mit einem ersten Anschlusspol des elektrischen Energiespeichers verbundenen Kernleiter und einen mit einem zweiten Anschlusspol des Energiespeichers verbundenen Mantelleiter, welcher den Kernleiter umgibt.

EP 0 197 370 A1 offenbart Gleichstrommotoren für den Antrieb einer Straßen- oder U-Bahn, die über Gleichstromsteller und über einen kapazitiven Energiespeicher enthaltendes Netzfilter aus einer Gleichstromquelle gespeist werden. Dabei sind die Gleichstrommotoren über jeweils ein Koaxialkabel indirekt, nämlich über das Netzfilter sowie jeweils einen der Gleichstromsteller mit der Gleichstromquelle verbunden.

FR 2 916 097 A1 offenbart ein System aus einem Gleichspannungsenergiespeicher, einem Wechselrichter sowie einem Wechselstrommotor, wobei diese Komponenten über Koaxialkabel verbunden sind.

DE 2 310 528 A1 offenbart die Verwendung eines Koaxialkabels zur elektrisch leitenden Verbindung einer Untersehkamera sowie zweier Scheinwerfer mit einer Gleichstromquelle.

Der Erfindung liegt die Aufgabe zugrunde, ein Elektrofahrrad der o.g. Art hinsichtlich des Bauraumbedarfs, der Verarbeitbarkeit und der mechanischen Festigkeit der Antriebsanordnung zu verbessern.

Diese Aufgabe wird erfindungsgemäß durch die Merkmale des Anspruchs 1 gelöst. Vorteilhafte Ausgestaltungen der Erfindung sind in den weiteren Ansprüchen beschrieben.

EP 0 197 370 A1 offenbart die folgenden Merkmale des Anspruchs 1:

Fahrzeug mit einer Antriebsanordnung mit einem Gleichstrommotor, einer Energiequelle für elektrische Energie, einem Motorsteuergerät für den Gleichstrommotor, einem die Energiequelle mit dem Gleichstrommotor elektrisch verbindenden Energieübertragungskabel, wobei das Energieübertragungskabel als Koaxialkabel ausgebildet ist, das mindestens einen Innenleiter, mindestens einen Außenleiter, mindestens einen zwischen dem Innenleiter und dem Außenleiter angeordneten Isolator sowie mindestens einen den Außenleiter umgebenden, elektrisch isolierenden Mantel aufweist.

Bei einem Elektrofahrrad der o.g. Art ist es erfindungsgemäß vorgesehen, dass das Energieübertragungskabel als Koaxialkabel ausgebildet ist.

Dies hat den Vorteil, dass ein Elektrofahrrad mit einer kompakten, hinsichtlich des Energieübertragungskabels wenig Bauraum benötigenden Antriebsanordnung zur Verfügung steht, wobei gleichzeitig das Energieübertragungskabel eine hohe mechanische Stabilität aufweist. Koaxialkabel können einfach verarbeitet und mit Steckverbindern versehen werden. Gleichzeitig ist das Energieübertragungskabel gegen unerwünschte Einkopplung von Hochfrequenzstrahlung abgeschirmt. Wahlweise kann das Energieübertragungskabel auch als Datenübertragungskabel von dem Elektromotor zu einer Steuerelektronik eingesetzt werde, ohne dass hierfür ein anderes Kabel erforderlich ist.

Eine hinsichtlich des Energieübertragungskabels besonders kompakte und mechanisch stabile Antriebsanordnung erzielt man dadurch, dass das Koaxialkabel mindestens einen Innenleiter, mindestens einen Außenleiter, mindestens einen zwischen dem Innenleiter und dem Außenleiter angeordneten Isolator sowie mindestens einen den Außenleiter umgebenden, elektrisch isolierenden Mantel aufweist.

Dadurch, dass der Außenleiter und der Innenleiter jeweils mit der Energiequelle und dem Elektromotor elektrisch verbunden sind, wird auch der Außenleiter zur Energieübertragung und nicht lediglich als Schirmung verwendet.

Zweckmäßigerweise ist der Elektromotor ein Gleichstrommotor oder ein Wechselstrommotor.

Eine hohe Antriebsleitung der Antriebsanordnung erzielt man dadurch, dass das Koaxialkabel zum Übertragen von hohen elektrischen Strömen, insbesondere von elektrischen Strömen größer gleich 30A, insbesondere größer gleich 50A, ausgebildet ist.

Ein hohes Drehmoment der Antriebsanordnung erzielt man dadurch, dass das Koaxialkabel für elektrische Spannungen von 0 bis 100V, insbesondere 48V, ausgebildet ist.

Eine hohe Energiedichte der Energiequelle erzielt man dadurch, dass die Energiequelle für elektrische Energie eine Batterie, ein Akkumulator, insbesondere ein Nickel-Metallhybrid-Akku, Nickel-Cadmium-Akku, Blei-Akku oder ein Lithium-Ionen-Akku, und/oder ein Generator ist.

Die Erfindung wird im Folgenden anhand der Zeichnung näher erläutert. Diese zeigt in:
Fig. 1 eine bevorzugte Ausführungsform einer Antriebanordnung für ein erfindungsgemäßes Elektrofahrrad in schematischer Darstellung und
Fig. 2 eine Schnittansicht des Bereiches A von Fig. 1 entlang einer Linie I-I von Fig. 1.

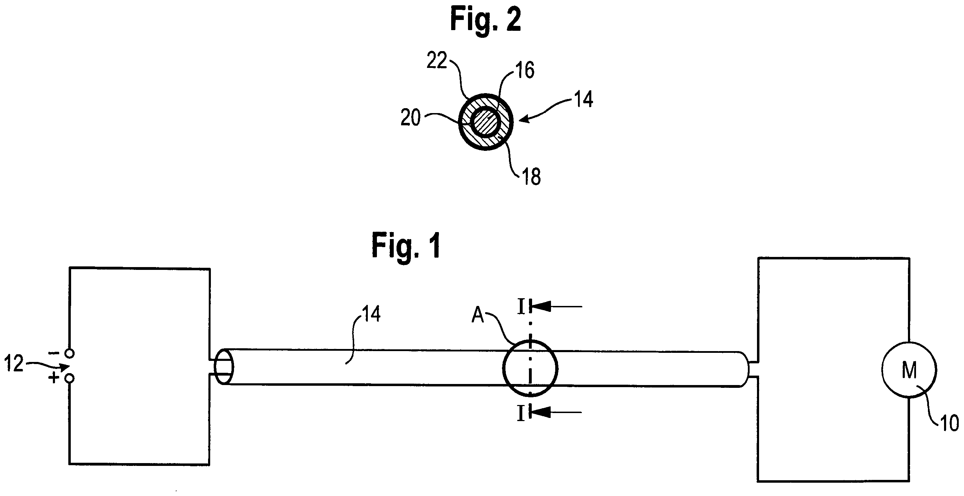

Die in Fig. 1 dargestellte, bevorzugte Ausführungsform einer Antriebsanordnung für ein erfindungsgemäßes, ansonsten nicht näher dargestelltes Elektrofahrrad umfasst einen Elektromotor 10, eine elektrische Energiequelle 12 und ein den Elektromotor 10 mit der elektrischen Energiequelle 12 elektrisch verbindendes Energieübertragungskabel 14.

Erfindungsgemäß ist dieses Energieübertragungskabel 14 als Koaxialkabel ausgebildet. Wie aus Fig. 2 ersichtlich, umfasst dieses Koaxialkabel einen Innenleiter 16 und einen den Innenleiter 16 koaxial umgebenden Außenleiter 18, wobei zwischen dem Innenleiter 16 und dem Außenleiter 18 ein Dielektrikum 20 angeordnet ist. Weiterhin weist das Koaxialkabel 12 einen den Außenleiter umgebenden Mantel 22 aus einem elektrisch isolierenden Werkstoff auf.

Der Elektromotor 10 ist beispielsweise ein Gleichstrommotor und das Koaxialkabel 12 überträgt von der elektrischen Energiequelle 12 zu dem Elektromotor 10 einen elektrischen Gleichstrom mit einer elektrischen Stromstärke von ≤ 30A oder ≤ 50A.

Die elektrische Energiequelle 12 ist vorzugsweise ein Lithium-Akkumulator. Es ist jedoch auch möglich, dass die elektrische Energiequelle 12 kein Energiespeicher, wie eine Batterie oder ein Akkumulator, sondern ein elektrischer Generator ist, der mechanische Antriebsenergie in elektrische Energie umwandelt. Dieser Generator wird beispielsweise von einer Brennkraftmaschine angetrieben.

Besonders vorteilhaft ist es, ein Elektrofahrzeug, wie beispielsweise ein Pedelec oder E-Bike, mit dieser Antriebsanordnung auszurüsten, da das als Powerkabel zur Übertragung von elektrischer Energie von dem elektrischen Energiespeicher 12 zu dem Elektromotor 10 verwendete Koaxialkabel 12 ähnliche und teilweise bessere mechanische Eigenschaften hinsichtlich Dicke, Biegesteifigkeit, Unempfindlichkeit gegen Umwelteinflüsse, Lebensdauer und Reißfestigkeit aufweist, wie ein bei Fahrrädern verwendeter Bowdenzug. Daher kann dieses Koaxialkabel 12 ohne besondere Vorkehrungen wie ein Bowdenzug am Pedelec verbaut werden. Gleichzeitig stellt das Koaxialkabel 12 aufgrund seiner Bauart kompakt, d.h. mit wenig Bauraumbedarf, ein Powerkabel zum Übertragen von hohen elektrischen Leistungen von der elektrischen Energiequelle 12 zum Elektromotor 10 zur Verfügung. Der Bauraumbedarf ist wesentlich geringer als sonst üblicherweise verwendeten zweiadrigen Stromkabeln bei diesen hohen elektrischen Stromstärken von bis zu 30A, 50A oder mehr.

Weiterhin stehen für Koaxialkabel bereits eine Vielzahl von Geräten und Maschinen zur Verfügung, um Koaxialkabel ggf. auch automatisiert und in großen Stückzahlen zu Verarbeit, zu konfektionierten, abzulängen und an deren Enden mit Steckern zu versehen.

Zusätzlich werden bei derartigen Antriebsanordnungen üblicherweise auch Kabel zur Datenübertragung in Form von HF-Signalen beispielsweise von einem Motorsteuergerät zum Elektromotor 10 oder von der elektrischen Energiequelle 12 zu dem Motorsteuergerät benötigt. In besonders vorteilhafter Weise können dafür identisch die als Powerkabel verwendeten Koaxialkabel verwendet werden, da diese bereits über die notwendige Abschirmung und Impedanz zur Übertragung von elektrischen HF-Signalen verfügen. Es müssen somit für die Datenübertragung und die Energieübertragung nicht verschiedenartige Kabel vorgehalten werden, sondern es können ein und dieselben Koaxialkabel lediglich ausgerüstete mit unterschiedlichen Steckern verwendet werden. Dies vereinfacht Herstellungs- und Montageprozesse sowie die dazugehörige Logistik.

## Patentansprüche

1. Elektrofahrrad, insbesondere Pedelec oder E-Bike, mit einer Antriebsanordnung mit einem Gleichstrommotor (10), einer Energiequelle (12) für elektrische Energie, einem Motorsteuergerät für den Gleichstrommotor (10), einem die Energiequelle (12) mit dem Gleichstrommotor (10) elektrisch verbindenden Energieübertragungskabel (14) und einem Kabel zur Datenübertragung von dem Motorsteuergerät zu dem Gleichstrommotor, wobei das Energieübertragungskabel (14) und das Datenübertragungskabel als Koaxialkabel ausgebildet sind, das mindestens einen Innenleiter (16), mindestens einen Außenleiter (18), mindestens einen zwischen dem Innenleiter (16) und dem Außenleiter (18) angeordneten Isolator (20) sowie mindestens einen den Außenleiter (18) umgebenden, elektrisch isolierenden Mantel (22) aufweist.

2. Elektrofahrrad nach mindestens einem der vorhergehenden Ansprüche, wobei das Koaxialkabel (14) zum Übertragen von hohen elektrischen Strömen, insbesondere von elektrischen Strömen größer gleich 30A, insbesondere 50A, ausgebildet ist.

3. Elektrofahrrad nach mindestens einem der vorhergehenden Ansprüche, wobei das Koaxialkabel (14) für elektrische Spannungen von 0 bis 100V, insbesondere 48V, ausgebildet ist.

4. Elektrofahrrad nach mindestens einem der vorhergehenden Ansprüche, wobei die Energiequelle (12) für elektrische Energie eine Batterie, ein Akkumulator, insbesondere ein Nickel-Metallhybrid-Akku, Nickel-Cadmium-Akku, Blei-Akku oder ein Lithium-Ionen-Akku, und/oder ein Generator ist.

## Claims

1. Electric bicycle, in particular a pedelec or e-bike, with a drive arrangement comprising a DC motor (10), an energy source (12) for electrical energy, a motor control device for the DC motor (10), an energy transmission cable (14) electrically connecting the energy source (12) with the DC motor (10) and a cable for data transmission from the motor control device to the DC motor, wherein the energy transmission cable (14) and the data transmission cable are designed as coaxial cables which comprise at least one inner conductor (16), at least one outer conductor (18), at least one insulator (20) arranged between the inner conductor (16) and the outer conductor (18) as well as at least one electrically insulating sheath (22) surrounding the outer conductor (18).

2. Electric bicycle according to at least one of the preceding claims, wherein the coaxial cable (14) is designed for the transmission of high electrical currents, in particular of electrical currents greater than or equal to 30A, in particular 50A.

3. Electric bicycle according to at least one of the preceding claims, wherein the coaxial cable (14) is designed for electrical voltages of 0 to 100V, in particular 48V.

4. Electric bicycle according to at least one of the preceding claims, wherein the energy source (12) for electrical energy is a battery, an accumulator, in particular a nickel-metal hybrid accumulator, nickel-cadmium accumulator, lead accumulator or a lithium-ion accumulator, and/or a generator.

## Revendications

1. Bicyclette électrique, en particulier pedelec ou vélo électrique, comportant un ensemble d'entraînement avec un moteur à courant continu (10), une source d'énergie (12) pour énergie électrique, un appareil de commande de moteur pour le moteur à courant continu (10), un câble de transmission d'énergie (14) reliant électriquement la source d'énergie (12) au moteur à courant continu (10) et un câble pour la transmission de données depuis l'appareil de commande de moteur au moteur à courant continu, le câble de transmission d'énergie (14) et le câble de transmission de données étant réalisés sous forme de câble coaxial qui comprend au moins un conducteur intérieur (16), au moins un conducteur extérieur (18), au moins un isolateur (20) agencé entre le conducteur intérieur (16) et le conducteur extérieur (18), ainsi qu'au moins une gaine électriquement isolante (22) qui entoure ledit au moins un conducteur extérieur (18).

2. Bicyclette électrique selon l'une au moins des revendications précédentes, dans laquelle le câble coaxial (14) est réalisé pour transmettre des courants électriques élevés, en particulier des courants électriques supérieurs ou égaux à 30 A, en particulier à 50 A.

3. Bicyclette électrique selon l'une au moins des revendications précédentes, dans laquelle le câble coaxial (14) est réalisé pour des tensions électriques de 0 à 100 V, en particulier de 48 V.

4. Bicyclette électrique selon l'une au moins des revendications précédentes, dans laquelle la source d'énergie (12) pour l'énergie électrique est une batterie, un accumulateur, en particulier un accumulateur hybride nickel-métal, un accumulateur nickel-cadmium, un accumulateur plomb-acide ou un accumulateur lithium-ion et/ou un générateur.
